# EUROPÄISCHE PATENTSCHRIFT

(11) **EP 1 202 792 B1**
(45) Veröffentlichungstag und Bekanntmachung des Hinweises auf die Patenterteilung: **11.05.2005**
(21) Anmeldenummer: 00958301.4
(22) Anmeldetag: 26.07.2000
(51) Int. Cl.: B01D 57/00

(54) **VERFAHREN UND VORRICHTUNG ZUR ELEKTROPHORETISCHEN TRENNUNG VON PARTIKELN, INSBESONDERE VON MAKROMOLEKÜLEN**
METHOD AND DEVICE FOR THE ELECTROPHORETIC SEPARATION OF PARTICLES, ESPECIALLY OF MACROMOLECULES
PROCEDES ET DISPOSITIFS DE SEPARATION ELECTROPHORETIQUE DE PARTICULES, EN PARTICULIER DE MACROMOLECULES

(30) Priorität: 26.07.1999 DE 19935028
(43) Veröffentlichungstag der Anmeldung: 08.05.2002
(73) Patentinhaber: Kahl, Johan-Valentin, 80799 München (DE); Nissen, Julia, 81547 München (DE); Rädler, Joachim, 85748 Garching (DE); Zantl, Roman, 80539 München (DE); Maier, Berenike, 85757 Karlsfeld (DE); Rädler, Ulf, 80805 München (DE)
(72) Erfinder: KAHL, Johan-Valentin, 80799 München (DE); NISSEN, Julia, 81547 München (DE); RÄDLER, Joachim, 85748 Garching (DE); ZANTL, Roman, 80539 München (DE); MAIER, Berenike, 85757 Karlsfeld (DE); RÄDLER, Ulf, 80805 München (DE); HOHNER, Andreas, 80995 München (DE); GALNEDER, Reinhard, 80805 München (DE)
(74) Vertreter: Grünecker, Kinkeldey, Stockmair & Schwanhäusser Anwaltssozietät
(86) Internationale Anmeldenummer: PCT/EP2000/007206
(87) Internationale Veröffentlichungsnummer: WO 2001/007150

(56) Entgegenhaltungen:
- EP-A- 0 396 053
- WO-A-96/23213
- WO-A-96/42012
- US-A- 5 059 294
- US-A- 5 066 382
- US-A- 5 423 966
- US-A- 5 427 663
- US-A- 5 630 924
- US-A- 5 846 394

## Beschreibung

### Gebiet der Erfindung

Die vorliegende Erfindung betrifft Verfahren und Vorrichtungen zur elektrophoretischen Trennung von Partikeln, insbesondere von Makromolekülen, wie beispielsweise DNA-, RNA-Makromoleküle, DNA-, RNA-Oliogomere und Proteinen.

### Stand der Technik

Elektrophoreseverfahren werden insbesondere in der Molekularbiologie, der Gentechnik und der Medizin eingesetzt, um Makromoleküle verschiedener Ladung und verschiedener Größe voneinander zu trennen.

Im Stand der Technik sind im wesentlichen zwei verschiedene Elektrophoreseverfahren zum Trennen von Makromolekülen, nämlich die sogenannte Gelelektrophorese und die Kapillargelelektrophorese bekannt Bei der Gelelektrophorese wird ein auf einer Platte aufgebrachtes Gel verwendet; bei der Kapillargelelektrophorese wird eine gelähnliche Polymerlösung in einer Kapillare vorgesehen.

Sowohl bei der Gel- als auch bei der Kapillargelelektrophorese nützt man die Tatsache aus, dass Makromoleküle mit verschiedener Ladung und Größe unter Einfluss eines äußeren elektrischen Feldes in einem Gel mit unterschiedlicher Geschwindigkeit wandem. Dadurch entstehen Banden, welche jeweils eine Spezies der verschiedenen Makromoleküle, also die Makromoleküle mit gleicher Ladung bzw. gleicher Größe, enthalten. Die Lage der Banden wird durch Färbetechniken oder UV-Lichtabsorption optisch ausgelesen.

Zum Auslesen der Banden wird hierzu auf das Gel eine Schicht eines Anfärbemittels aufgebracht und dort bei genau kontrollierter Temperatur für eine bestimmte Zeit bebelassen. Danach wird die Anfärbereaktion durch Entzug des Wassers aus dem Gel unterbunden.

Als Gele verwendet man typischerweise Agarose, Celluloseacetat oder Acrylamid. Die Gel- und Kapillargelelektrophorese wird beispielsweise bei der DNA-Analyse in der medizinischen Forschung und Diagnose verwendet. Durch Restriktionsfragmentanalyse können beispielsweise Aussagen über Erbinformation getroffen werden, weshalb die Gelelektrophorese bei der Diagnose von genetisch bedingten Krankheiten große Bedeutung erlangt hat.

Die wesentlichen Nachteile des Gel- und des Kapillarelektrophoreseverfahrens sind zum einen der erhebliche Zeitaufwand zur Vorbereitung und Durchführung der Elektrophorese und zum anderen, dass große Mengen an Probenmaterial zur Analyse benötigt werden.

Insbesondere sind in beiden Verfahren die gebräuchlichen Elektrophoresewege verhältnismäßig lang. Dies führt zu Wanderzeiten von ca. 2 Stunden. Weiterhin muss vor dem eigentlichen Elektrophoresevorgang zunächst das Gel vorbereitet werden, beispielsweise gegossen werden. Eine Automatisierung dieses Vorgangs ist zwar möglich, jedoch mit hohem Aufwand verbunden, da die notwendigen Geräte hohe Kosten verursachen. Deshalb wird die Elektrophorese oft per Hand durchgeführt, was zu einer weiteren Erhöhung des Zeitaufwands führt.

Weiterhin lassen sich die bekannten Verfahren nicht beliebig miniaturisieren, um beispielsweise die erforderlichen Probenmengen gering zu halten.

Aus der US 5 427 663 ist eine Sortiervorrichtung für Mikrostrukturen bekannt, die einen Behälter mit einer Anordnung von Hindemissen umfasst. Eine Separationsmatrix zur Untersuchung von Biopolymeren ist in der WO 96/42012 offenbart.

Angesichts der aufgeführten Nachteile liegt der Erfindung die Aufgabe zugrunde, ein Verfahren und Vorrichtungen zur Durchführung eines Verfahrens zu schaffen, in dem bzw. mit denen einerseits der Zeitaufwand zur Trennung von Makromolekülen mittels der Elektrophorese verringert werden kann und die andererseits zur Miniaturisierung geeignet sind, so dass bereits geringe Probenmengen zur Analyse ausreichen.

### Beschreibung der Erfindung

Die zuvor genannte Aufgabe wird gelöst durch ein Verfahren zur elektrophoretischen Trennung von Partikeln, insbesondere von Makromolekülen, mit den Schritten eines Aufbringen der zu trennenden Partikel auf eine substratgestützte Membran, so dass die Partikel entlang der Oberfläche der substratgestützten Membran beweglich sind, eines Vorsehen eines elektrischen Feldes, derart dass die Feldrichtung entlang der Oberfläche, entlang der die Partikel beweglich sind, ausgerichtet ist, und eines zeitliches Verändems des elektrischen Feldes und/oder eines Verwendens einer substratgestützten Membran mit einer strukturierten Oberfläche, wobei das elektrische Feld zeitlich so verändert wird und/oder die substratgestützte Membran so strukturiert ist, dass auf die Partikel eine Kraft wirkt, die zu einer von der Länge der Partikel abhängigen Bewegung führt.

Durch bestimmte Auswahl des angelegten elektrischen Feldes und/oder eine entsprechende Strukturierung der Membran wirkt auf die Partikel eine Kraft, die von der Länge der Makromoleküle abhängt, so dass für Makromoleküle in Abhängigkeit von ihrer Größe eine unterschiedliche Weglänge in dem elektrischen Feid resultiert. Gegenüber dem Stand der Technik können bei dem erfindungsgemäßen Verfahren die Laufzeiten dadurch stark verringert werden, dass sich die Makromoleküle nicht mehr in dem Gel fortbewegen müssen, sondern lediglich an der Oberfläche der Membran gebunden sind, im übrigen aber frei beweglich sind. Die hohe Mobilität der Makromoleküle auf der Membran führt somit zur einer erheblichen Verringerung der Zeitdauer zur Durchführung der Elektrophorese. Weiterhin ist der Zeitaufwand zur Herstellung einer Membran wesentlich geringer als der Zeitaufwand, der zum Gießen eines Gels erforderlich ist.

Gemäß einer bevorzugten Weiterbildung des erfindungsgemäßen Verfahrens wird als substratgestützte Membran eine fluide Lipidmembran verwendet. Durch eine derartige Membran wird sichergestellt, dass die Partikel einerseits an der Membran gebunden werden und andererseits eine hinreichend hohe Mobilität auf der Oberfläche der Membran haben. Die aus dem Stand der Technik bekannte dreidimensionale Bewegung kann somit auf eine quasi-zweidimensionale Bewegung zurückgeführt werden.

Derartige Membranen können beispielsweise PEG funktionalisierte Lipide oder DAC-Chol: 3-beta-(N-(N,N'-Dimethylaminoethan)-carbamoyl)(-cholesterolhydrochlorid) umfassen.

Vorzugsweise kann hierzu eine kationische fluide Lipidmembran verwendet werden. Durch eine derartige Membran lassen sich die in der Regel negativ geladenen DNA-, RNA-Makromoleküle, bzw. DNA-, RNA-Oliogomere an die Membran binden.

Gemäß einer anderen Weiterbildung können zum Aufbau der fluiden Membran amphiphile Makromoleküle verwendet werden. Amphiphile Moleküle zeichnen sich dadurch aus, dass sie Mono- und Doppelschichten in wässriger Lösung formen.

Entsprechend einer anderen Weiterbildung der zuvor beschriebenen Verfahren kann eine fluide Lipidmembran verwendet wird, die Mono- bzw. Doppelschichten aus geladenen Lipiden aufweist. Hierdurch wird einerseits eine gute Haftung der Membran an dem Substrat gewährleistet und andererseits die Bindung der Makromoleküle an der Membran sichergestellt. Darüber hinaus kann auf diese Weise die Membran vergleichsweise dünn ausgebildet werden, so dass eine Beobachtung der Banden mit optischen Einrichtungen problemlos möglich ist.

Gemäß einer ersten Alternative der zuvor beschriebenen Verfahren wird ein gepulstes elektrisches Feld verwendet. Die Makromoleküle verschiedener Größe, die auf die Membran aufgebracht worden sind, führen zunächst eine ungeordnete Brown'sche Bewegung durch. Wenn nun ein gepulstes elektrisches Feld angelegt wird, richten sich die verschiedenen Makromoleküle während des ersten Pulses entlang der Feldlinien aus. Diese Ausrichtung findet in Abhängigkeit von der Größe der Makromoleküle statt, wobei sich die kleineren Makromoleküle schneller als die größeren Makromoleküle ausrichten. Nachdem ein Makromolekül im elektrischen Feld ausgerichtet ist, beginnt es mit seiner Bewegung in Richtung des Feldgradienten. Folglich beginnen kleinere Makromoleküle eher als größere Makromoleküle mit der Bewegung im elektrischen Feld. In dem Zeitraum zwischen dem ersten und dem zweiten Puls findet wieder eine ungeordnete Brown'sche Bewegung der Makromoleküle statt; allerdings führen die kleineren Makromoleküle aufgrund ihrer größeren, während des ersten Pulses zurückgelegten Strecke ihre ungeordnete Bewegung an einem anderen Ort als die größeren Makromoleküle durch. Wenn nun der zweite Puls angelegt wird, findet wiederum eine Ausrichtung der Makromoleküle entlang der Feldlinien statt. Auch hierbei richten sich kleinere Makromoleküle schneller als größere Makromoleküle aus und legen während des zweiten Pulses wiederum eine größere Strecke im elektrischen Feld zurück. Insgesamt kann auf diese Weise eine Separierung der Makromoleküle in Abhängigkeit von ihrer Größe erzielt werden.

Entsprechend einer zweiten Alternative der oben beschriebenen Verfahren kann ein Wechselfeld verwendet werden, dem ein zeitlich konstantes Feld überlagert ist. Durch das zeitlich konstante Feld werden die Makromoleküle im Wesentlichen in Richtung der Feldlinien bewegt. Die Bewegung in diesem Feld wird allerdings auch durch das Wechselfeld, in dem sich die Makromoleküle ausrichten, beeinflusst. Da sich analog zum obigen Fall die Makromoleküle mit einer Geschwindigkeit, die mit ihrer Größe abnimmt, im Wechselfeld ausrichten und darüber hinaus im Wechselfeld bewegen, legen die kleineren Makromoleküle in einer Zeiteinheit wiederum eine größere Strecke zurück. Dadurch dass die Makrömoleküle unter dem Einfluss des Wechselfeldes nicht nur ausgerichtet werden, sondern sich auch im Wechselfeld bewegen, führen die Makromoleküle insgesamt eine Zick-Zack-Bewegung auf der Oberfläche der Membran durch.

Vorteilhafterweise können hierbei das Wechselfeld und das zeitlich konstante Feld kreuzartig überlagert werden. In diesem Fall ergibt sich ein symmetrischer Weg der Makromoleküle auf der Membran.

Zusätzlich kann in den Verfahren gemäß der ersten und der zweiten Alternative zur Stützung der Membran ein Substrat verwendet werden, dessen Oberfläche Rippen aufweist. Hierdurch wird die Bewegung, insbesondere eine Ausrichtung der Makromoleküle im elektrischen Feld in Abhängigkeit von ihrer Größe noch weiter beeinflusst. Insbesondere wird die Reibungskraft bei der Ausrichtung für größere Makromoleküle stärker erhöht als für kleinere Makromoleküle, was insgesamt zu einer weiteren Diskriminierung bezüglich der Größe der Makromoleküle führt.

Zur Durchführung des Verfahrens hat sich hierbei ein Substrat als zweckmäßig erwiesen, dessen Rippen eine Periodizität in einem Bereich von 2nm bis 200nm aufweisen. Vorteilhafterweise liegt hierbei die Höhe der Rippen in einem Bereich von 0.1nm bis 10nm.

Entsprechend einer dritten Alternative der zuvor beschriebenen Verfahren kann bei Verwendung einer Membran, die auf einem Substrat mit Rippen vorgesehen ist, ein zeitlich konstantes Feld, dessen Richtung im wesentlichen senkrecht zu den Rippen verläuft, verwendet werden. Hierbei erfahren größere Makromoleküle eine höhere Reibungskraft als kleinere Makromoleküle, wodurch sich für diese größeren Makromoleküle eine kleinere Geschwindigkeit in Feldrichtung ergibt. Hierdurch wird wiederum eine längenabhängige Separierung der Makromoleküle erzielt.

Entsprechend einer vorteilhaften Weiterbildung aller zuvor beschriebenen Verfahren wird eine Membran verwendet, die einen Sperrbereich aufweist, in den keine Bewegung der Partikel möglich ist bzw. an deren Grenze die Makromoleküle gestoppt werden. Durch Anlegen eines entsprechenden elektrischen Feldes vor der Durchführung der eigentlichen Elektrophorese lassen sich so die Partikel in einem schmalen Bereich vor diesem Sperrbereich sammeln. Hierdurch wird ein klar definierter Startpunkt und eine enge Bandbreite für die während der Elektrophorese durchgeführte Bewegung definiert. Dies führt insgesamt zu einer verbesserten Auflösung des Verfahrens.

Bei Verwendung einer fluiden Membran kann der Sperrbereich durch einen nicht fluiden Bereich in der fluiden Membran realisiert werden. Dieser lässt sich beispielsweise dadurch erzielen, dass das Substrat mit einem Material beschichtet wird, auf dem die eigentlich fluide Membran nicht fluide ist. Hierzu eignet sich beispielsweise Al₂O₃. Ein derartiger Sperrbereich kann auch dadurch erzielt werden, dass auf dem Substrat ein anderes Material aufgebracht wird, so dass sich in diesem Bereich keine fluide Membran ausbilden kann. Hierzu eignet sich beispielsweise Al₂O₃.

Die oben beschriebenen erfindungsgemäßen Verfahren können in einem Verfahren zur Beobachtung einer elektrophoretischen Trennung eingesetzt werden. Hierzu werden, während der Durchführung einer elektrophoretischen Trennung, vorzugsweise digitalisierte Bilddaten, beispielsweise mit einer an einem optischen Mikroskop angeschlossenen Videokamera aufgezeichnet. Nachfolgend können diese aufgezeichneten Bilddaten computergestützt ausgewertet werden.

Gegenüber dem Stand der Technik hat diese Weiterbildung den großen Vorteil, dass auch dynamische Prozesse auf einfache Weise beobachtet werden können. So ist es beispielsweise möglich, DNA-schneidende Enzyme bei ihrer Aktivität zu beobachten.

Die oben beschriebenen Verfahren zur elektrophoretischen Trennung eignen sich, wie bereits angedeutet, besonders zur Trennung von DNA-, RNA-Makromolekülen, DNA-, RNA-Oligomeren. Darüber hinaus lassen sich mit diesem Verfahren aber auch eine Vielzahl anderer Makromoleküle, wie beispielsweise Proteine, untersuchen.

Vorteilhafterweise kann zur Erhöhung der Auflösung die sogenannte isoelektrische Fokussierung verwendet werden. Hierbei wandern die Partikel in einem pH-Gradienten bis zu einem pH-Wert, der ihrem isoelektrischen Punkt entspricht, an dem sie eine Nettoladung von Null haben. Das heißt die Wanderungsgeschwindigkeit ist an diesem Punkt ebenfalls Null. In der eindimensionalen Proteinelektrophorese ist das pH-Gradientenfeld parallel zum elektrischen Feld. In der 2D Elektrophorese steht der pH-Gradient senkrecht zum angelegten Feld.

Erfindungsgemäß wird weiterhin ein Substrat, insbesondere zur Stützung einer Membran, bei der Durchführung eines der oben beschriebenen Verfahren geschaffen, das aus optisch transparentem Material besteht. Mit einem derartigen Substrat ist es, insbesondere im Zusammenhang mit der relativ dünnen Membran möglich, die Banden der verschiedenen Makromolekülgrößen, die sich nach einer elektrophoretischen Trennung eingestellt haben, direkt, beispielsweise mittels eines optischen Mikroskops, zu beobachten oder mit einer Videokamera aufzuzeichnen. Dies führt zu dem Vorteil, dass die Makromoleküle bei der Analyse im nativen Zustand erhalten bleiben, wodurch sie spater folgenden Analyseschritten, beispielsweise einer DNA-Hybridisierung, zugänglich bleiben.

Gemäß einer Weiterbildung kann das Substrat Glas als optisch transparentes Material aufweisen.

Alternativ lassen sich auch Kunststoffe als optisch transparentes Material einsetzen. Hierzu lassen sich insbesondere Kunststoffe, wie PC, PMMA, PS, PE oder Plastik aus zyklischen Olefinen verwenden. Da Kunststoffe einfacher als Glas zu verarbeiten sind, eignen sie sich insbesondere wenn das Substrat komplizierte Strukturen, beispielsweise zur Durchführung eines Verfahrens mit einem strukturierten Substrat aufweisen soll.

In den Verfahren, in denen ein strukturiertes Substrat verwendet wird, eignet sich insbesondere ein Substrat mit einer Oberfläche, die Rippen aufweist. Vorteilhafterweise haben die Rippen in dem Substrat eine Periodizität in einem Bereich von 2nm bis 200nm. Als eine Höhe der Rippen hat sich insbesondere eine Höhe in einem Bereich von 0.1nm bis 10nm als günstig erwiesen.

Der wesentliche Punkt bei strukturierten Substraten ist, dass Makromoleküle, die sich auf einer Membran, die auf einem derartigen Substrat aufgebracht ist, eine von ihrer Größe abhängige Reibungskraft erfahren. Demgemäß lassen sich auch anders geformte Strukturen, die zu diesem Effekt führen, einsetzen.

Obwohl diese Substrate auf vorteilhafte Weise in den zuvor beschriebenen Verfahren verwendet werden können, lassen sie sich auch in anderen Anwendungen, beispielsweise beim Strecken oder Orientieren von Makromolekülen, einsetzen. Dies gilt insbesondere für die Substrate mit strukturierter Oberfläche, beispielsweise der rippenförmigen Oberfläche.

Außerdem wird erfindungsgemäß eine substratgestützte Membran geschaffen, die sich insbesondere zur Durchführung der oben beschriebenen Verfahren eignet, die eines der zuvor beschriebenen Substrate und eine auf dem jeweiligen Substrat aufgebrachte fluide Lipidmembran aufweist.

Durch diese substratgestütze Membran wird eine einfache Einrichtung zur Durchführung der oben beschriebenen Verfahren zur Verfügung gestellt.

Vorteilhafterweise kann die substratgestützte Membran eine fluide Lipidmembran mit kationischen Lipiden aufweisen. Es lassen sich vorteilhafterweise auch amphiphile Makromoleküle zur Ausbildung der Membran verwenden. Darüber hinaus kann die fluide Lipidmembran Doppelschichten aus geladenen Lipiden aufweisen. Auch kann die fluide Membran der substratgestützten Membran wenigstens einen nicht fluiden Bereich aufweisen.

Mit diesen vorteilhaften Weiterbildungen können die bereits im Zusammenhang mit den Verfahren diskutierten Vorteile erzielt werden. Um Wiederholungen zu vermeiden wird hier lediglich auf die entsprechenden Stellen bei der Beschreibung der erfindungsgemäßen Verfahren verwiesen.

Entsprechend einer anderen Weiterbildung kann die fluide Lipidmembran der substratgestützten Membran eingetrocknet sein. Dadurch kann das Substrat mit der eingetrockneten Membran gelagert werden. Zum Einsatz der substratgestützten Membran muss diese dann lediglich mit Wasser und/oder einer Pufferlösung aufgequollen werden. Bei derart vorbereiteten Membranen können etwaige Fehler und Abweichungen beim Herstellen der Membran, insbesondere beim Ansetzen der Lösungen für die Membran, vermieden werden, so dass die Reproduzierbarkeit von Ergebnissen erhöht wird.

Erfindungsgemäß wird darüber hinaus eine Mikrokanalelektrophoresekammer geschaffen mit wenigstens einem Kanal, dessen Bodenfläche eines der zuvor beschriebenen Substrate aufweist, und mit einer Elektrodenanordnung aufweist.

In einer derartigen Mikrokanalelektrophoresekammer können die einzelnen Arbeitsschritte, wie die Festlegung des Startpunktes, das elektrophoretische Trennen der Partikel durch Bewegung im elektrischen Feld und die optische Auswertung der Banden, integriert werden. Demnach wird das Verfahren gegenüber dem Stand der Technik, gemäß dem es erforderlich war, diese Arbeitsschritte in verschiedenen Stufen und an verschiedenen Arbeitsplätzen durchzuführen, erheblich vereinfacht werden. Weiterhin ist es in einer derartigen Mikrokanalelektrophoresekammer möglich, Makromoleküle auszustrecken, zu manipulieren und gleichzeitig optischen Methoden zugänglich zu machen.

Vorteilhafterweise haben hierbei jeder Kanal eine Breite in einem Bereich von 1 µm bis 10mm und eine Tiefe in einem Bereich von 1µm bis 5000µm.

Entsprechend einer vorteilhaften Weiterbildung kann die Mikrokanalelektrophoresekammer eine Mehrzahl von Kanälen umfassen, die in Form einer zweidimensionalen Matrix angeordnet sind. Hierdurch ist es möglich, eine Mehrzahl von Experimenten gleichzeitig durchzuführen.

Gemäß einer bevorzugten Weiterbildung der Mikrokanalelektrophoresekammer kann die Elektrodenanordnung zwei jeweils an den Längsenden eines jeden Kanals vorgesehene Elektroden aufweisen. Diese Weiterbildung führt zu einer weiteren Vereinfachung der Versuchsanordnung. So können hierdurch die Elektroden bereits in der Mikrokanalelektrophoresekammer integriert werden und die Mikrokanalelektrophoresekammer muss am Messplatz lediglich angeschlossen werden. Weiterhin kann dadurch, dass die Elektroden bereits in der Mikrokanalelektrophoresekammer vorgesehen sind, eine vorbestimmte Anordnung in bezug auf jeden Kanal und damit auch in Bezug auf jeden Kanal und damit auch in Bezug auf die Membran realisiert werden, was zu einem gegenüber der Membran fest definierten Feld führt. Hierdurch lässt sich gegenüber dem Stand der Technik eine weitere Miniaturisierung verwirklichen, die gemäß dem Stand der Technik aufgrund der Positionierungsgenauigkeit des elektrischen Feldes in Bezug auf die Membran beschränkt ist.

Gemäß einer anderen Weiterbildung kann die Elektrodenanordnung alternativ oder zusätzlich zwei Elektroden aufweisen, die sich zu beiden Seiten eines jeden Kanals in Kanallängsrichtung erstrecken. Diese Weiterbildung eignet sich insbesondere für das oben beschriebene Verfahren, in dem ein Wechselfeld und ein zeitlich konstantes dazu gekreuztes Feld vorgesehen werden. Selbstverständlich werden auch hier die Vorteile, die im Zusammenhang mit der oben beschriebenen Elektrodenanordnung diskutiert worden sind, erzielt.

In den zuvor beschrieben Mikrokanalelektrophoresekammem kann das Substrat mit einer fluiden Lipidmembran beschichtet sein. Diese fluide Lipidmembran kann kationische Lipide aufweisen. Vorteilhafterweise kann die fluide Lipidmembran amphiphile Makromoleküle umfassen. Darüber hinaus kann die fluide Lipidmembran Doppelschichten aus geladenen Lipiden aufweisen, in eingetrockneter Form vorliegen und/oder wenigstens einen nicht fluiden Bereich aufweisen.

Durch diese speziellen Weiterbildungen können die bereits im Zusammenhang mit den verschiedenen Verfahren und den verschiedenen substratgestützten Membranen diskutierten Vorteile erzielt werden. Um Wiederholungen zu vermeiden, wird lediglich auf die betreffenden Diskussionen dieser Merkmale in diesem Zusammenhang mit den Verfahren und den substratgestützten Membranen verwiesen.

Im Folgenden wird die Erfindung anhand verschiedener Ausführungsbeispiele unter Bezugnahme auf die beigefügte Zeichnung beschrieben. In der Zeichnung zeigen:
- Figur 1:: eine Ausführungsform einer Mikrokanalelektrophoresekammer zur Erläuterung einer ersten Ausführungsform des Verfahrens zur elektrophoretischen Trennung von Partikeln gemäß der Erfindung;
- Figur 2:: eine erste Ausführungsform einer substratgestützten Membran zur Erläuterung einer zweiten Ausführungsform des Verfahrens zur elektrophoretischen Trennung von Partikeln gemäß der Erfindung; und
- Figur 3:: eine zweite Ausführungsform einer substratgestützten Membran zur Erläuterung einer dritten Ausführungsform des Verfahrens zur elektrophoretischen Trennung von Partikeln gemäß der Erfindung.

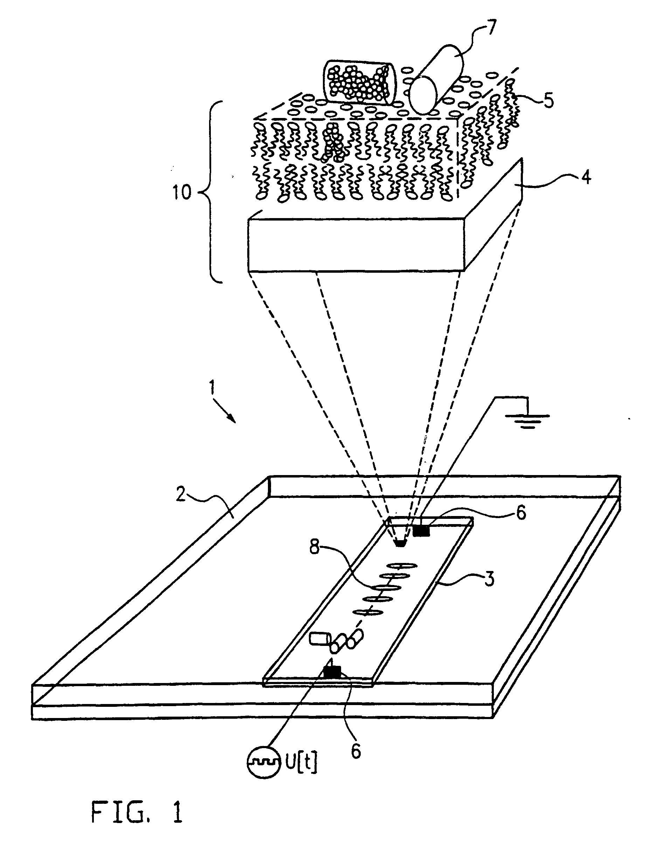

In Figur 1 ist eine Ausführungsform einer Mikrokanalelektrophoresekammer zur Erläuterung einer ersten Ausführungsform des Verfahrens zur elektrophoretischen Trennung von Partikeln gemäß der Erfindung dargestellt.

Diese Mikrokanalelektrophoresekammer 1 umfasst einen Kammerkörper 2, in dem ein Kanal 3 vorgesehen ist. Die Bodenfläche des Kanals 3 ist hierbei durch ein unstrukturiertes Substrat 4 ausgebildet. Das Substrat 4 ist optisch transparent ausgebildet, beispielsweise aus Glas, aus Kunststoff, wie PMMA, PC, PS, PE oder ähnlichen Materialien. Weiterhin ist das Substrat hierbei bis zu 100µm dünn. Hierdurch wird die Mikrokanalelektrophoresekammer 1 optischen Ausleseverfahren direkt zugänglich.

Das Substrat 4 kann in eine entsprechende Öffnung in den Kammerkörper eingesetzt werden, oder wie im vorliegenden Fall dargestellt, direkt als Teil des Kammerkörpers ausgebildet sein. Hierzu bietet sich an, einen Kanal mit der entsprechenden Tiefe in einem Bereich von 1 µm-5000µm in dem Kammerkörper vorzusehen.

Auf dem Substrat ist eine fluide Membran 5 aufgebracht, wie insbesondere in der Ausschnittsdarstellung in Figur 1 zu sehen ist. In der vorliegenden Ausführungsform ist die Membran 5 in Form einer Doppelschicht Lipidmembran, beispielsweise einer DOPC/DOTAP-Membran, vorgesehen.

Weiterhin umfasst die Elektrophoresekammer eine Elektrodenanordnung 6 mit zwei an den Längsenden des Kanals 3 vorgesehenen Elektroden, die herkömmliche Materialen, wie Platin, Gold, Ag/AgCl etc. aufweisen. Eine dieser Elektroden ist geerdet; an die andere Elektrode wird, wie unten noch im Detail erläutert, eine gepulste Spannung im Bereich von 2 bis 1000V angelegt.

Wie weiterhin in der Ausschnittszeichnung dargestellt, befinden sich in der Membran 5 zwei Makromoleküle.

Die gesamte in Figur 1 dargestellte Anordnung, also die Membran 5, die Makromoleküle 7 und das Substrat 4 befinden sich in einer Flüssigkeit, beispielsweise in Wasser, oder molekülstabilisierender Puffer.

Im Folgenden wird eine erste Ausführungsform des Verfahrens zur elektrophoretischen Trennung von Makromolekülen unter Bezugnahme auf Figur 1 beschrieben.

In der in Figur 1 gezeigten Ausführungsform wird, wie auch in Figur 1 angedeutet, ein elektrisches Feld verwendet. Die Makromoleküle 7 verschiedener Größe, die auf die Membran 5 aufgebracht worden sind, führen zwischen den Spannungspulsen, also bei einer Spannung von 0V, eine ungeordnete Brown'sche Bewegung durch. Während der Spannungspulse hingegen richten sich die verschiedenen Makromoleküle zunächst entlang der Feldlinien aus. Diese Ausrichtung findet in Abhängigkeit von der Größe der Makromoleküle statt, wobei sich die kleineren Makromoleküle schneller als die größeren Makromoleküle ausrichten. Nachdem ein Makromolekül im elektrischen Feld ausgerichtet ist, beginnt es, ebenfalls während der Spannungsimpulse mit seiner Bewegung im elektrischen Feld, und zwar in Richtung des elektrischen Feldes. Da kleinere Makromoleküle im Feld schneller als größere Makromoleküle ausgerichtet werden, beginnen diese eher mit der Bewegung im elektrischen Feld und legen deshalb während eines Spannungspulses in dem Feld eine größere Strecke als die größeren Makromoleküle zurück.

Während des Anlegens einer gepulsten Spannung legen somit die Makromoleküle in Abhängigkeit von ihrer Ladung bzw. Größe verschiedene Strecken auf der Membran 5 in dem Kanal 3 zurück und sammeln sich entsprechend ihrer Ladung bzw. Größe in sogenannten Banden 8, wie dies in Figur 1 dargestellt ist.

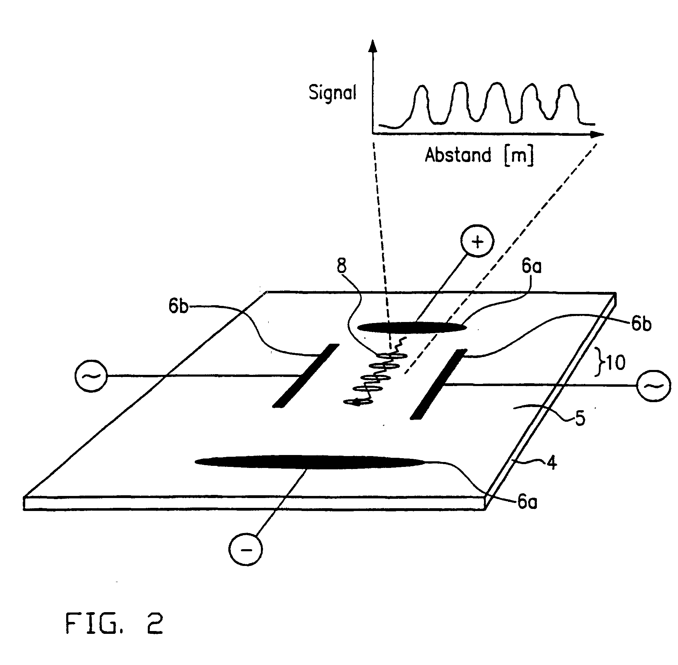

In Figur 2 ist eine erste Ausführungsform einer substratgestützten Membran 10 zur Erläuterung einer zweiten Ausführungsform des Verfahrens zur elektrophoretischen Trennung von Partikeln gemäß der Erfindung dargestellt. im Folgenden werden zur Vermeidung von Wiederholungen lediglich die Unterschiede zwischen beiden Anordnungen beschrieben. Gleiche Bezugszeichen bezeichnen hierbei gleiche Komponenten der entsprechenden Anordnungen.

Die substratgestützte Membran 10 in Figur 2 unterscheidet sich von der in Figur 1 dargestellten Anordnung im Wesentlichen durch die Elektrodenanordnung. Weiterhin ist die substratgestützte Membran 10 in einem Kammerkörper als Kanalboden vorgesehen. Die übrigen Komponenten entsprechen denjenigen der in Figur 1 gezeigten Struktur; zur Beschreibung derselben wird deshalb auf die entsprechende oben stehende Diskussion verwiesen.

Die Elektrodenanordnung umfasst in der in Figur 2 dargestellten substratgestützten Membran zwei Elektroden 6a und zwei Elektroden 6b. An die Elektroden 6a wird eine Gleichspannung, die vorzugsweise in einem Bereich von 2 bis 1000 V liegt, angelegt, an die Elektroden 6b eine Wechselspannung, die vorzugsweise in einem Bereich von 2 bis 1000 V liegt und eine Frequenz in dem Bereich von 0.1 bis 200 Hz aufweist.

Ebenso wie in der in Figur 1 gezeigten Anordnung befinden sich auch hier die Membran, das Substrat und Makromoleküle in einer Flüssigkeit, beispielsweise in Wasser.

Im Folgenden wird eine zweite Ausführungsform des Verfahrens zur elektrophoretischen Trennung von Makromolekülen unter Verwendung einer substratgestützten Membran, wie in Figur 2 gezeigt, beschrieben.

Durch das zeitlich konstante Feld, das durch die Elektroden 6a verursacht wird, werden die Makromoleküle im Wesentlichen in Richtung des Feldgradienten bewegt. Die Bewegung in diesem Feld wird allerdings auch durch das durch die Elektroden 6b erzeugte Wechselfeld, in dem sich die Makromoleküle zum einen ausrichten und zum anderen bewegen, beeinflusst. Da sich analog zum obigen Fall die Makromoleküle mit einer Geschwindigkeit, die mit ihrer Größe abnimmt, im Wechselfeld ausrichten und darüber hinaus im Wechselfeld bewegen, legen die kleineren Makromoleküle in einer Zeiteinheit wiederum eine größere Strecke zurück. Dadurch, dass die Makromoleküle unter dem Einfluss des Wechselfeldes nicht nur ausgerichtet werden, sondern sich auch im Wechselfeld bewegen, führen sie insgesamt eine Zick-Zack-Bewegung auf der Oberfläche der Membran durch, wie dies in Figur 2 angedeutet ist.

Ebenso wie im Fall des ersten Verfahrens sammeln sich die Makromoleküle, da sie entsprechend ihrer Größe bzw. Ladung unterschiedliche Strecken zurücklegen, in den Banden 8, die in Figur 2 auf der Membran angedeutet und darüber hinaus in einem Histogramm dargestellt sind (das Histogramm zeigt hierbei die Anzahl der Moleküle in Abhängigkeit der zurückgelegten Wegstrecke auf der substratgestützten Membran).

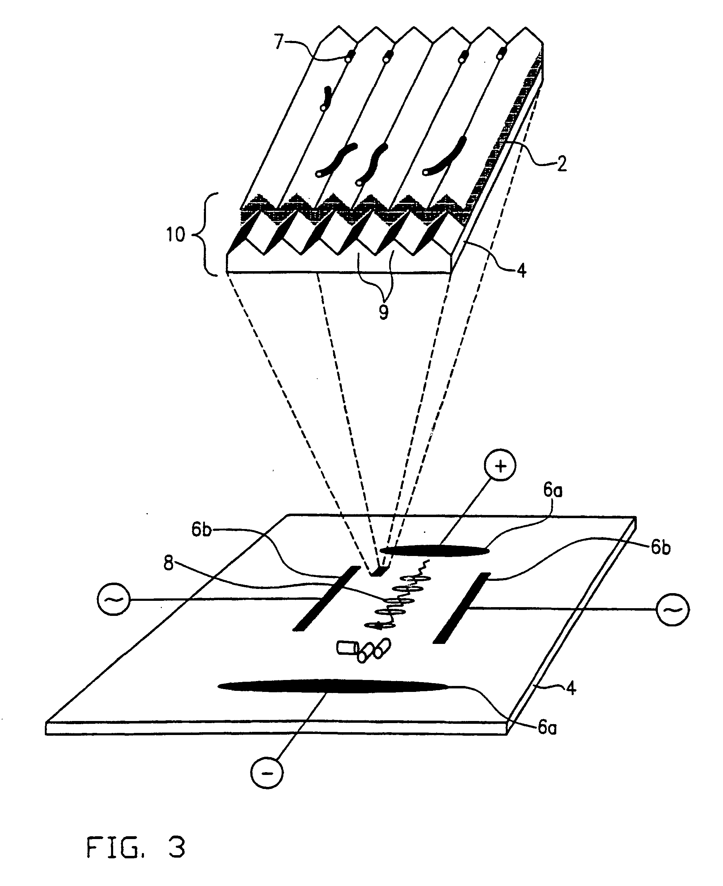

In Figur 3 ist eine zweite Ausführungsform einer substratgestützten Membran zur Erläuterung einer dritten Ausführungsform des Verfahrens zur elektrophoretischen Trennung von Partikeln gemäß der Erfindung dargestellt.

Diese Ausführungsform unterscheidet sich von der in Figur 2 gezeigten substratgestützten Membran dadurch, dass die Oberfläche des Substrats 4 mit Rippen 9 versehen ist. Im Übrigen entspricht die dargestellte Ausführungsform der in Figur 2 dargestellten, weshalb zur Vermeidung von Wiederholungen auf die Diskussion dieser Ausführungsform verwiesen wird.

In der Ausführungsform in Figur 3 wird ein Substrat verwendet, dessen Rippen 9 eine Periodizität in einem Bereich von 2 nm bis 200 nm aufweisen. Die Höhe der Rippen liegt hierbei in einem Bereich von 0.1 nm bis 10 nm.

In einem Substrat aus den oben bezeichneten Kunststoffen kann die Strukturierung beispielsweise durch das Eindrücken eines Stempels, welcher das Negativ der gewünschten Form enthält, gebildet werden. Hierbei wird der Kunststoff zweckmäßigerweise erwärmt. Als Stempel kann ein in der (111) Ebene geschnittener Si-Wafer, der mit KOH angeätzt wurde, verwendet werden.

Durch Verwendung des Substrats 4 mit Rippen 9 wird die Bewegung, insbesondere die Ausrichtung, der Makromoleküle auf einer auf einem derartigen Substrat aufgebrachten Membran im elektrischen Feld in Abhängigkeit von ihrer Größe noch stärker beeinflusst. Insbesondere wird die Reibungskraft bei der Ausrichtung für größere Makromoleküle stärker erhöht als für kleinere Makromoleküle, was insgesamt zu einer weiteren Diskriminierung bezüglich der Größe der Makromoleküle führt.

Zur weiteren Erläuterung der Erfindung werden im Folgenden verschiedene Beispiele, die mit den oben beschriebenen Einrichtungen durchgeführt worden sind, beschrieben.

### Beispiel 1:

### Präparation einer substratgestützten Membran durch Vesikelfusion

Im Beispiel 1 wurde eine substratgestützte Membran durch Herstellen einer kationischen Doppelschicht aus Lipiden durch Vesikelfusion auf einem Glasträger realisiert. Hierzu wurden beispielsweise in Chloroform gelöste Lipide gemischt. Ein typisches Verhältnis ist DOPC/DOTAP 9/1. Diese Lösung wurde eingetrocknet, und daraufhin wurden die Lipide mit Wasser oder Pufferlösung, beispielsweise HEPES 10mM, NaCl 10mM, EDTA 1mM wieder aufgequollen. Die Lipidkonzentration betrug dabei ungefähr 1mg/ml. Diese Lösung wurde mit einem Rüsselbeschaller 1 bis 2min beschallt. Die zu beschichtende Oberfläche wurde vor dem eigentlichen Vesikelfusionsvorgang so behandelt, dass sie stark hydrophil war. Dazu eignet sich beispielsweise eine einminütige Behandlung mit 5M KaOH-Lösung. Zum Füllen einer Kammer, wie sie zuvor beschrieben worden ist, wurden ca. 2ml der Vesikellösung in die Kammer gegeben. Nach ungefähr 2h wurde die Kammer mit der Pufferlösung gut gespült, um den Lipidüberschuss zu entfernen. In der Kammer verblieb nach diesem Vorgang eine Doppelschicht mit einer Dicke von ungefähr 4nm. Zwischen der Doppelschicht und dem Substrat bildete sich eine etwa 0.1nm dicke Wasserschicht aus. In diesem Beispiel hatte die Membran eine laterale Selbstdiffusionskonstante von ca. 1µm²/s.

Da die elektrophoretische Trennung in dem vorliegenden Beispiel mit hochauflösender Mikroskopie ausgewertet werden sollte, wurde ein transparentes optisch inertes Substrat bzw. Kammerboden verwendet, dessen Dicke zwischen 100 und 200 µm lag.

### Trennung der DNA durch gepulste Felder

Die zu trennenden Makromoleküle, beispielsweise DNA 80 bp (Basenpaare) und 40 bp wurden ebenfalls in die Kammer gegeben.

Doppelsträngige DNA der Länge 80 bp zeigten im vorliegenden Beispiel auf der fluiden Membran eine Selbstdiffusionskonstante von 0.2µm²/s, 40 bp lange DNA dagegen eine Diffusionskonstante von 0.4µm²/s.

Durch das Anlegen eines gepulsten Feldes zwischen 0.1V/cm und 100V/cm trennen sich die DNA-Makromoteküle. Dabei wurde ausgenützt, dass sich die DNA-Oligomere durch Eigenrotationsdiffusion bei jedem Abschalten des Feldes wieder zufällig orientieren. Diese Tatsache bricht das Proportionalitätsverhältnis zwischen DNA-Basenpaaranzahl und Beweglichkeit.

Um Polarisierungen der Elektroden zu vermeiden, wurden geschwärzte Platinelektroden oder Ag/AgCl Elektroden verwendet. Je nach Kammergröße, Salzgehalt der Pufferlösung und angelegter Spannung fließt ein Storm zwischen 0.1 µA und 10 mA. Das E-Feld wurde ca. 10 min angelegt.

### Sichtbarmachung der DNA Banden durch Fluoreszenzmarkierung

Durch die Zugabe von DNA Farbstoffen, beispielsweise TOTO in einem Verhältnis von einem Toto-Makromolekül auf fünf DNA Basenpaare, ist die DNA nach ca. 10 min bei Raumtemperatur fluoreszenzmarkiert. Dazu wird Wasser/Puffer mit der entsprechenden Menge TOTO in die Kammer gespült. Zur Beobachtung der Banden wurde ein Axiovert 100 der Firma Carl Zeiss verwendet. Es zeigten sich die zwei Banden der 40 bp und 80 bp langen Oligomere.

### Beispiel 2:

### Präparation einer kationischen Monoschicht oder Doppelschicht durch Langmuir-Blodgett-Technik

Durch die Langmuir-Blodgett-Technik wurde eine fluide Membran auf PMMA aufgebracht; anstelle von PMMA wurden auch PC, PE, PS, PVC sowie zyklische Olefine verwendet. Bei der Langmuir-Blodgett-Technik werden in Chloroform gelöste amphiphile Moleküle an der Wasseroberfläche eines Teflontroges gespreitet, so dass der hydrophile Molekülbereich in das Wasser eindringt und der hydrophobe Anteil aus dem Wasser herausragt. Diesen Film kann man mittels einer geeigneten Barriere auf den gewünschten lateralen Druck komprimieren. Taucht man nun ein vertikal ausgerichtetes Plättchen aus den oben genannten Materialien durch diesen Film ins Wasser ein, bildet sich eine fluide Monoschicht auf der Plättchenoberfläche.

Mit dieser substratgestützten Membran wurden dieselben Versuche wie in Beispiel 1 durchgeführt und dieselben Ergebnisse erhalten.

### Beispiel 3:

Es wurde eine substratgestützte Membran gemäß Beispiel 1 oder gemäß Beispiel 2 hergestellt.

### Trennung der DNA durch Kreuzfelder

Im Gegensatz zum ersten und zweiten Beispiel wurde zur Trennung der DNA 80 bp und DNA 40 bp, jedoch kein gepulstes Feld verwendet, sondern gekreuzte Felder, d.h. ein konstantes Feld überlagert von einem Wechselfeld, angelegt.

Dabei hatte das konstante Feld eine Feldstärke zwischen 2 bis 200 V/cm, das Wechseispannungsfeld eine Feldstärke zwischen 2-200 V/cm bei einer Frequenz von 0.1 bis 100 Hz. Hierzu wurden Platinum/Platinum Black oder alternativ Ag/AgCl Elektroden verwendet.

Mit dieser substratgestützten Membran wurden dieselben Versuche wie in Beispiel 1 durchgeführt und dieselben Ergebnisse erhalten.

### Beispiel 4:

Es wurde eine substratgestützte Membran gemäß Beispiel 1 oder gemäß Beispiel 2 hergestellt.

### Trennung der DNA durch Substratstrukturierung

Die Membran wird auf ein zuvor strukturiertes Substrat, wie es beispielsweise in Figur 3 gezeigt ist und im Zusammenhang mit dieser Figur beschrieben ist, aufgebracht. Dieses Substrat hatte Rippel mit ca. 0,1 nm Höhe und 100 nm Periodizität. Weiterhin waren die verwendeten Substrate transparent und hatten eine Dicke von 100 µm bis 200 µm. Die Elektrodenanordnung wurde wie in Beispiel 3 angesteuert.

Die mit dieser Anordnung erhaltenen Ergebnisse entsprechen dem in Beispiel 3 erhaltenen Ergebnis, wobei der relative Abstand der Banden zueinander größer war.

### Beispiel 5:

### Sammeln der DNS auf einer Linie durch Schaffung nicht fluider Bereiche

Teile des Kammerbodens wurden mit Materialien beschichtet, auf welcher die, wie in den Beispielen 1 bis 4 beschrieben, aufgebrachte Membran nicht fluide ist. Hierzu wurden beispielsweise Al₂O₃ P oder PMMA verwendet. Diese Bereiche bilden für die auf der Membran beweglichen DNA-Makromofeküle eine Sperrschicht. Durch Anlegen eines elektrischen Feldes, welches die DNA in Richtung dieser Sperrschicht bewegt, können diese an der Grenze zwischen Membran und Sperrschicht gesammelt werden.

Mit dieser Membran wurden eine elektrophoretische Trennung wie in Beispiel 1 durchgeführt. Im Ergebnis zeigten sich schärfere Banden, also Banden, deren Ausdehnung in Feldrichtung geringer als die der in Beispiel 1 erhaltenen Banden war.

### Beispiel 6:

### Sammeln der DNS auf einer Linie durch Schaffung nicht von der Membran benetzter Bereiche

Durch Aufbringen von Al₂O₃ auf einen vorbestimmten Bereich des Kammerbodens mit einer Höhe von 10 nm bis 1 µm und einer Breite von 1- 30 µm, wurde vermieden, dass sich in diesem Bereich eine Membran ausbildet. Hiermit wurden die gleichen Versuche wie in Beispiel 1 durchgeführt und die gleichen Ergebnisse wie in Beispiel 5, also schärfere Banden erhalten.

## Patentansprüche

1. Verfahren zur elektrophoretischen Trennung von Partikeln, insbesondere von membranständigen Makromolekülen, mit den Schritten:
Aufbringen der zu trennenden Partikel auf eine substratgestützte Membran, so dass die Partikel entlang der Oberfläche der substratgestützten Membran beweglich sind,
Vorsehen eines elektrischen Feldes derart, dass die Feldrichtung entlang der Oberfläche, entlang der die Partikel beweglich sind, ausgerichtet ist,
zeitliches Verändern der Stärke oder Richtung elektrischen Feldes und/oder Verwenden einer substratgestützten Membran mit einer strukturierten Oberfläche, wobei die Stärke oder Richtung des elektrischen Feldes zeitlich so verändert wird und/oder die substratgestützte Membran so strukturiert ist, dass auf die Partikel eine Kraft wirkt, die zu einer von der Länge der Partikel abhängigen Bewegung führt.

2. Verfahren nach Anspruch 1, in welchem als substratgestützte Membran eine fluide Lipidmembran, insbesondere aus PEG funktionalisierten Lipiden und/oder aus DAC-Chol-Lipiden verwendet wird.

3. Verfahren nach Anspruch 2, in welchem eine kationische fluide Lipidmembran verwendet wird.

4. Verfahren nach Anspruch 2 oder 3, in welchem eine fluide Membran verwendet wird, die amphiphile Makromoleküle aufweist.

5. Verfahren nach einem der Ansprüche 2 bis 4, in welchem eine fluide Lipidmembran verwendet wird, die Doppelschichten aus geladenen Lipiden aufweist.

6. Verfahren nach einem der vorangegangenen Ansprüche, in welchem ein gepulstes elektrisches Feld verwendet wird.

7. Verfahren nach einem der Ansprüche 1 bis 5, in welchem ein Wechselfeld verwendet wird, dem ein zeitlich konstantes Feld überlagert ist.

8. Verfahren nach Anspruch 7, in welchem das Wechselfeld und das zeitlich konstante Feld kreuzartig überlagert werden.

9. Verfahren nach einem der vorangegangenen Ansprüche, in welchem zur Stützung der Membran ein Substrat verwendet wird, dessen Oberfläche Rippen aufweist.

10. Verfahren nach Anspruch 9, in welchem ein Substrat verwendet wird, das eine Periodizität in einem Bereich von 2nm bis 200nm aufweist.

11. Verfahren nach Anspruch 9 oder 10, in welchem ein Substrat verwendet wird, das eine Höhe der Rippen in einem Bereich von 0.1nm bis 10nm aufweist.

12. Verfahren nach einem der Ansprüche 9 bis 11, in welchem ein zeitlich konstantes Feld, dessen Richtung im Wesentlichen parallel zu den Rippen verläuft, verwendet wird.

13. Verfahren nach einem der vorangegangenen Ansprüche, in welchem die Bewegung eine Drehung ist.

14. Verfahren nach einem der vorangegangenen Ansprüche, in welchem die Membran einen Sperrbereich, in den keine Bewegung der Partikel möglich ist, aufweist, und vor Durchführung der Elektrophorese die Partikel durch Anlegen eines elektrischen Feldes an diesem Sperrbereich gesammelt werden.

15. Verfahren nach Anspruch 14 in Verbindung mit einem der Ansprüche 2 bis 5, in welchem der Sperrbereich durch einen nicht fluiden Bereich der fluiden Membran realisiert wird.

16. Verfahren nach einem der Ansprüche 1 bis 14, mit den weiteren Schritten:
Aufzeichnen von digitalisierten Bilddaten von der elektrophoretischen Trennung,
computergestütztes Auswerten der aufgezeichneten Bilddaten.

17. Verfahren nach einem der vorangegangenen Ansprüche, in welchem die zu trennenden Partikel DNA, RNA, DNA-, RNA-Oligomere und/oder Proteine aufweisen.

18. Verfahren nach einem der vorangegangenen Ansprüche, in welchem die Partikel in einem pH-Gradienten wandern.

19. Verfahren nach Anspruch 18, in welchem der pH-Gradient parallel oder senkrecht zum elektrischen Feld vorgesehen ist.

20. Substratgestützte Membran mit
einem Substrat aus optisch transparentem Material, vorzugsweise aus Glas oder Kunststoff, dieser vorzugsweise umfassend PC, PMMA, PS, PE oder Plastik aus zyklischen Olefinen, und
einer fluiden Lipidmembran, wobei die fluide Lipidmembran eingetrocknet ist.

21. Substratgestützte Membran nach Anspruch 20, in welcher die fluide Lipidmembran kationische Lipide aufweist.

22. Substratgestützte Membran nach Anspruch 20 oder 21, in welcher die fluide Lipidmembran amphiphile Makromoleküle aufweist.

23. Substratgestützte Membran nach einem der Ansprüche 20 bis 22, in welcher die fluide Lipidmembran Doppelschichten aus geladenen Lipiden aufweist.

24. Substratgestützte Membran nach einem der Ansprüche 20 bis 23, in welcher die fluide Membran wenigstens einen nicht fluiden Bereich aufweist.

25. Mikrokanalelektrophoresekammer (1) mit
wenigstens einem Kanal (3), dessen Bodenfläche eine substratgestützte Membran nach einem der Ansprüche 20 bis 24 aufweist, und
einer Elektrodenanordnung (6; 6a, 6b).

26. Mikrokanalelektrophoresekammer nach Anspruch 25, in welcher jeder Kanal eine Breite in einem Bereich von 1µm bis 10 mm aufweist.

27. Mikrokanatelektrophoresekannmer nach Anspruch 25 oder 26, in welcher jeder Kanal eine Tiefe in einem Bereich von 10 nm bis 20µm aufweist.

28. Mikrokanalelektrophoresekammer nach einem der Ansprüche 25 bis 27, in welcher die Elektrodenanordnung zwei jeweils an den Längsenden eines jeden Kanals vorgesehene Elektroden aufweist.

29. Mikrokanalelektrophoresekammer nach einem der Ansprüche 25 bis 28, in welcher die Elektrodenanordnung zwei Elektroden aufweist, die sich zu beiden Seiten eines jeden Kanals in Kanallängsrichtung erstrecken.

## Claims

1. A method for the electrophoretic separation of particles, particularly of membrane-adherent macromolecules, the method comprising the steps of:
applying the particles to be separated on a substrate supported membrane such that the particles are mobile along the surface of the substrate supported membrane;
providing an electrical field such that the direction of the field is oriented along the surface along which the particles are mobile;
temporarily modifying the strength or direction of the electrical field and/or using a substrate supported membrane with a structured surface, wherein the strength or direction of the electrical filed is modified in time and/or the substrate supported membrane is structured such that a force is acting on the particles that leads to a movement depending on the length of the particles.

2. A method according to claim 1, wherein a fluid lipid membrane, particularly of PEG-functionalized lipids and/or of DAX-Chol lipids, is used as a substrate supported membrane.

3. A method according to claim 2, wherein a cationic fluid lipid membrane is used.

4. A method according to claim 2 or 3, wherein a fluid membrane is used that comprises amphiphilic macromolecules.

5. A method according to any one of claims 2 to 4, wherein a fluid lipid membrane is used that comprises bilayers of charged lipids.

6. A method according to any one of the preceding claims 1, wherein a pulsed electrical field is used.

7. A method according to any one of claims 1 to 5, wherein an alternating field is used on which a time constant field is superimposed.

8. A method according to claim 7, wherein the alternating field and the time constant field are superimposed in a crosswise manner.

9. A method according to any one of the preceding claims, wherein a substrate having a surface comprising ribs is used for supporting the membrane.

10. A method according to claim 9, wherein a substrate is used that exhibits a periodicity ranging from 2 nm to 200 nm.

11. A method according to claim 9 or 10, wherein a substrate is used in which the height of the ribs is in the range of 0.1 nm to 10 nm.

12. A method according to any one of claims 9 to 11, wherein a time constant field is used, the direction of which is substantially parallel to the ribs.

13. A method according to any one of the preceding claims, wherein said movement is a rotation.

14. A method according to any one of the preceding claims, wherein the membrane comprises an exclusion area in which the particles are not mobile and wherein prior to performing the electrophoresis, the particles are collected at said exclusion area upon the application of an electrical field.

15. A method according to claim 14 in combination with any one of claims 2 to 5, wherein the exclusion area is provided by a non-fluid area of the fluid membrane.

16. A method according to any one of claims 1 to 14, comprising the further steps of:
recording digitized image data from the electrophoretic separation; and
evaluating the recorded image data by a computer.

17. A method according to any one of the preceding claims, wherein the particles to be separated comprise DNA, RNA, DNA-, RNA-oligomers and/or proteins.

18. A method according to any one of the preceding claims, wherein the particles migrate in a pH gradient.

19. A method according to claim 18, wherein the pH gradient is provided in parallel with or perpendicular to the electrical field.

20. A substrate supported membrane comprising
a substrate of optically transparent material, preferably of glass or plastics, said plastics preferably comprising PC, PMMA, PS, PE or plastics formed of cyclic olefins, and
a fluid lipid membrane, wherein the fluid lipid membrane is dried up.

21. A substrate supported membrane according to claim 20, wherein the fluid lipid membrane comprises cationic lipids.

22. A substrate supported membrane according to claim 20 or 21, wherein the fluid lipid membrane comprises amphiphilic macromolecules.

23. A substrate supported membrane according to any one of claims 20 to 22, wherein the fluid lipid membrane comprises bilayers of charges lipids.

24. A substrate supported membrane according to any one of claims 20 to 23, wherein the fluid membrane comprises at least one non-fluid area.

25. A microchannel electrophoresis chamber (1) comprising:
at least one channel (3) having a bottom surface including a substrate supported membrane according to any one of claims 20 to 24, and
an electrode assembly (6; 6a, 6b).

26. A microchannel electrophoresis chamber according to claim 25, wherein each channel has a width ranging from 1 µm to 10 mm.

27. A microchannel electrophoresis chamber according to claim 25 or claim 26, wherein each channel has a depth ranging from 10 nm to 20 µm.

28. A microchannel electrophoresis chamber according to any one of claims 25 to 27, wherein the electrode assembly comprises two electrodes provided at each longitudinal end of each of the channels.

29. A microchannel electrophoresis chamber according to any one of claims 25 to 28, wherein the electrode assembly comprises two electrodes longitudinally extending in the direction of the channel at both sides of each channel.

## Revendications

1. Procédé de séparation électrophorétique de particules, en particulier de macromolécules membranaires, comportant les étapes consistant à :
déposer les particules à séparer sur une membrane supportée par un substrat, de sorte que les particules soient mobiles le long de la surface de la membrane supportée par un substrat,
générer un champ électrique, de sorte que la direction du champ soit orientée le long de la surface le long de laquelle se déplacent les particules,
modifier dans le temps l'intensité ou la direction du champ électrique et/ou utiliser une membrane supportée par un substrat présentant une surface structurée, l'intensité ou la direction du champ électrique étant modifiée dans le temps et/ou la membrane supportée par un substrat étant structurée, de telle sorte qu'une force provoquant un déplacement dépendant de la longueur des particules agisse sur les particules.

2. Procédé selon la revendication 1, dans lequel on utilise, comme membrane supportée par un substrat, une membrane lipidique fluide, en particulier constituée de lipides fonctionnalisés par du PEG et/ou des DAC-Chol-lipides.

3. Procédé selon la revendication 2, dans lequel on utilise une membrane lipidique fluide cationique.

4. Procédé selon la revendication 2 ou 3, dans lequel on utilise une membrane fluide, qui comporte des macromolécules amphiphiles.

5. Procédé selon l'une des revendications 2 à 4, dans lequel on utilise une membrane lipidique fluide qui comporte des doubles couches de lipides chargés.

6. Procédé selon l'une des revendications précédentes, dans lequel on utilise un champ électrique pulsé.

7. Procédé selon l'une des revendications 1 à 5, dans lequel on utilise un champ alternatif auquel est superposé un champ constant dans le temps.

8. Procédé selon la revendication 7, dans lequel le champ alternatif et le champ constant dans le temps sont superposés de façon croisée.

9. Procédé selon l'une des revendications précédentes, dans lequel on utilise pour supporter la membrane un substrat dont la surface présente des nervures.

10. Procédé selon la revendication 9, dans lequel on utilise un substrat qui a une périodicité de la plage de 2 nm à 200 nm.

11. Procédé selon la revendication 9 ou 10, dans lequel on utilise un substrat dont la hauteur des nervures est dans la plage de 0,1 nm à 10 nm.

12. Procédé selon l'une des revendications 9 à 11, dans lequel on utilise un champ constant dans le temps, dont la direction est sensiblement parallèle aux nervures.

13. Procédé selon l'une des revendications précédentes, dans lequel le déplacement est une rotation.

14. Procédé selon l'une des revendications précédentes, dans lequel la membrane comporte une région de blocage dans laquelle aucun déplacement des particules n'est possible et, avant la réalisation de l'électrophorèse, les particules sont collectées par application d'un champ électrique au niveau de cette région de blocage.

15. Procédé selon la revendication 14 en liaison avec l'une des revendications 2 à 5, dans lequel la région de blocage est réalisée par une région non fluide de la membrane fluide.

16. Procédé selon l'une des revendications 1 à 14, comportant en outre les étapes consistant à :
enregistrer des données d'image numérisées de la séparation électrophorétique,
exploiter par voie informatique les données d'image enregistrées.

17. Procédé selon l'une des revendications précédentes, dans lequel les particules à séparer sont un ADN, un ARN, des oligomères d'ADN, des oligomères d'ARN, et/ou des protéines.

18. Procédé selon l'une des revendications précédentes, dans lequel les particules se déplacent dans un gradient de pH.

19. Procédé selon la revendication 18, dans lequel le gradient de pH est prévu parallèlement ou perpendiculairement au champ électrique.

20. Membrane supportée par un substrat, pourvue d'un substrat constitué d'un matériau optiquement transparent, avantageusement du verre ou une matière plastique, celle-ci comportant avantageusement du PC, du PMMA, du PS, du PE ou une matière plastique constituée d'oléfines cycliques, et d'une membrane lipidique fluide, cette dernière étant desséchée.

21. Membrane supportée par un substrat selon la revendication 20, dans laquelle la membrane lipidique fluide comprend des lipides cationiques.

22. Membrane supportée par un substrat selon la revendication 20 ou 21, dans laquelle la membrane lipidique fluide comprend des macromolécules amphiphiles.

23. Membrane supportée par un substrat selon l'une des revendications 20 à 22, dans laquelle la membrane lipidique fluide comprend des doubles couches en lipides chargés.

24. Membrane supportée par un substrat selon l'une des revendications 20 à 23, dans laquelle la membrane fluide comprend au moins une région non fluide.

25. Chambre d'électrophorèse à microcanal (1) pourvue
d'au moins un canal (3) dont le fond comporte une membrane supportée par un substrat selon l'une des revendications 20 à 24, et
un dispositif formant électrode (6 ;6a , 6b).

26. Chambre d'électrophorèse à microcanal selon la revendication 25, dans laquelle chaque canal présente une largeur située dans la plage de 1 µm à 10 mm.

27. Chambre d'électrophorèse à microcanal selon la revendication 25 ou 26, dans laquelle chaque canal a une profondeur située dans la plage de 10 nm à 20 µm.

28. Chambre d'électrophorèse à microcanal selon l'une des revendications 25 à 27, dans laquelle le dispositif formant électrode présente deux électrodes prévues sur les extrémités longitudinales de chaque canal.

29. Chambre d'électrophorèse à microcanal selon l'une des revendications 25 à 28, dans laquelle le dispositif formant électrode présente deux électrodes qui s'étendent des deux côtés de chaque canal dans la direction longitudinale du canal.
